# EUROPEAN PATENT SPECIFICATION

(11) **EP 1 530 426 B1**
(45) Date of publication and mention of the grant of the patent: **21.11.2012**
(21) Application number: 03748229.6
(22) Date of filing: 12.08.2003
(51) Int. Cl.: A23G 9/32, A23G 9/52, A23G 9/04, A23G 9/20

(54) **MANUFACTURE OF ICE CREAM**
HERSTELLUNG VON SPEISEEIS
FABRICATION DE CREME GLACEE

(30) Priority: 23.08.2002 GB 0219739; 01.05.2003 GB 0310076
(43) Date of publication of application: 18.05.2005
(73) Proprietor: The BOC Group Limited, The Surrey Research Park Guildford Surrey GU2 7XY (GB)
(72) Inventor: BROOKER, Brian, Edward, Reading Berkshire RG4 6UR (GB); TOMLINS, Richard, Ivor, Henley-on-Thames Oxon RG9 6DE (GB)
(74) Representative: Wickham, Michael
(86) International application number: PCT/GB2003/003503
(87) International publication number: WO 2004/017747

(56) References cited:
- EP-A- 0 147 483
- EP-A- 0 289 069
- EP-A- 0 727 148
- EP-A- 1 052 284
- EP-A2- 1 114 674
- WO-A-02/49445
- WO-A-95/20324
- US-A- 4 219 581
- US-A- 4 434 186
- US-B1- 6 349 549

## Description

This invention relates to the manufacture of ice cream.

Ice cream is made by incorporating air into an oil-in-water emulsion as it is slowly frozen. By the term "ice cream" as used herein is meant a partly frozen foam containing a disperse phase of fat droplets and a continuous aqueous phase of dissolved and colloidal solids, such that the latter typically, but not essentially or exclusively, includes sugars (usually sucrose and lactose), proteins (usually milk solids) and stabilisers. Although the fat of choice is traditionally butterfat or dairy cream, increasing volumes of ice cream are made using hydrogenated vegetable or tropical hard fats. The disperse phase contains a mixture of oil and solid fat (ideally at least 75% solid or crystalline fat at -5°C) as well as an emulsifler (usually a mixture of lipophilic mono- and di-glycerides), whilst the aqueous phase contains a number of ingredients, of which milk protein, sugar and a stabiliser are the most important components in common use. Alternatively, a monoglyceride emulsifier may be dissolved in the aqueous phase with the other watersoluble ingredients.

In general, the manufacture of ice cream involves the following basic steps. After blending the selected liquid and dry ingredients using a high-speed mixer at 50-60°C, the coarse Ice cream mix or emulsion is pasteurised, homogenised and cooled to about 4°C, by which time the droplets of oil/fat are stabilised by an interfacial layer of adsorbed milk proteins. Homogenisation of the emulsion involves pumping at high pressure through an homogenisation valve or orifice in order to produce a particle size reduction of the emulsion droplets. The cooled emulsion is held in "conditioning" or "ageing" tanks at about 5°C for some hours prior to freezing in order to allow a) the interfacial milk protein to be displaced from the surface of the fat globules by the more surface active emulsifier and b) the solid fat, especially the higher melting point fat, to crystallise. This "ageing" stage is vitally important because it is only when the emulsifier has displaced the interfacial protein and itself comes to occupy the oil-water interface of each fat droplet and fat crystallisation has occurred, that it is possible for fat globules to stabilise air bubbles by attaching to their surface during air incorporation, and to thus form a stable, high volume foam for freezing. The time required for this "ageing" stage of production is long (and therefore expensive) and inevitably increases the cost of the final product, but it also dictates that the manufacture of ice cream is intrinsically a discontinuous process. This step is followed by air incorporation and dynamic freezing, both steps usually being performed in a scraped surface heat exchanger and, finally, hardening by blast freezing at -30° to -40°C.

WO-A-02149445 discloses a spray-dried powdered fat composition comprising 10-80% by weight of a crystallising fat such as butter fat, palm oil or a hydrogenated fat or oil with the balance composed of one or more proteins, or emulsifier, water, a carbohydrate and optionally a stabiliser. The composition may be rehydrated and used to form any one of a number of different food products, including ice cream.

EP-A-1 114 674 discloses a method of forming a food product, particularly a bakery product or a product such as margarine or peanut butter, which contains a hydrogenated fat. A spray of a product mix, in liquid form, containing the hydrogenated fat, is contacted with cryogen such as liquid nitrogen so as to cool the product and effect a rapid conversion of the liquid product to a solid. By so treating the product, the proportion of hydrogenated fat on it can be reduced.

According to the invention there is provided a method of making ice cream, including the steps of blending in the presence of at least one emulsifier an aqueous ice cream precursor phase with precrystallised particles of edible fat which each contain a multiplicity of individual crystals so as to form a dispersion, and gasifying and freezing the dispersion so as to form an ice cream, in
which the particles of edible fat are precrystallised cryogenically and the said dispersion is gasified and frozen without being subjected to homogenisation or ageing.

By employing precrystallised particles of edible fat, the conventional homogenisation and ageing steps do not need to be performed. Furthermore, an emulsifier may be introduced into the edible fat before precrystallisation thereby enabling effective blending of the fat with the aqueous phase to be performed rapidly.

The particles of edible fat are precrystallised cryogenically. The cryogenic precrystallisation may be performed by forming the edible fat into fine particles in molten state and contacting the fine particles with a cryogen. Typically, a spray of liquid cryogen is directed at the fine particles of edible fat in molten state. The liquid cryogen is conveniently liquid nitrogen, although liquid air or liquid argon may, for example be used instead.

The precrystallised particles of edible fat typically each take the form of a globule containing a mass of crystals (of very fine size) with entrapped pockets of oil.

Preferably, an emulsifier is introduced into the edible fat before it is precrystallised. The emulsifier is typically a lipophilic emulsifier, for example, a saturated monoglyceride such as glycerol monostearate.

Suitable classes of edible fat for use in the method according to the present invention include milk fat, anhydrous milk fat, at least one milk fat fraction, a hydrogenated vegetable oil, a hard tropical fat, or a hydrogenated tropical fat. Examples of non-dairy fats include fats formed by the hydrogenation of oils such as palm oil and sunflower oil.

The terms "cryogenic" and "cryogenically" as used herein mean that the temperature of the medium used to effect precrystallisation of the fat is less than minus 50°C, preferably less than minus 100°C.

One example of the method according to the invention involves cryogenically freezing a fine aerosol or spray or mist of a suitable fat (that can for example be milk fat, anhydrous milk fat, one or more milk fat fractions, hydrogenated vegetable oil, a tropical hard fat or any other edible oil containing a suitable level of solid fat) that may contain an appropriate added emulsifier, to produce a fine fat powder, although other cooling processes that achieve these conditions may also be used for the same purpose. When the fat powder is returned to ambient temperature, or the temperature of the ice cream making process, it consists of droplets of fat, or fat globules, in which crystallisation of the fat is complete and the emulsifier is associated with their surface. Addition of this powder to the pasteurised aqueous phase of the ice cream formulation, followed by high speed mixing, produces a mixture that is immediately ready for air (or other gas) incorporation and freezing in a conventional manner and therefore the homogenisation and "conditioning" or "ageing" stages are no longer necessary.

In a further example a lipophilic emulsifier such as a saturated monoglyceride, for example, glycerol monostearate is dispersed in a molten, commercial ice cream fat and the fat then sprayed as a fine aerosol or as a mist from a spinning disc or some other similar device that produces small droplets, to impinge onto a liquid cryogen, or co-sprayed with the cryogen, or in some other way brought into close contact with a cryogen to obtain the highest possible rate of cooling. The resulting fine powder consists of numerous spherical fat particles, each of which consists of a mass of very fine fat crystals with entrapped pockets of oil. These particles can be added directly to the aqueous phase of ice cream mixes to produce a fine fat dispersion of what is, in effect, an emulsion. The fat powder can be wetted by the aqueous phase because of the presence of emulsifier on the surface of each powder particle. Individual fat particles act as globules of fat that are able to stabilise air bubbles by attaching to their surface when, as part of the normal ice cream making process, air is incorporated into the aqueous phase during freezing. Emulsions formed in this way freeze to form ice creams with similar microscopic structure, physical properties and mouth-feel as ice creams prepared with the same materials using conventional methods.

In a yet further example of this invention, a lipophilic emulsifier is dissolved in the fat phase, as described above, but the aqueous phase to which the fat is added also contains a highly surface active, water soluble emulsifier, such as a Tween or a Span (for example, Polysorbate 60 or Span 60. Whereas the lipophilic emulsifier water facilitates wetting of the fat particles' surface by the aqueous phase during blending and ensures that emulsifier is already present at the surface of the fat particles when the aqueous phase is added, the water soluble emulsifer lowers the surface tension of the fat particles to very low levels and promotes the separation (and wetting) of fat crystals from fat particles; in this way, large numbers of emulsifier-coated fat crystals become dispersed in the aqueous phase. Thus, both fat crystals and fat particles are available to attach to the surface of bubbles and to take part in air (or other gas) stabilisation when the aeration process begins, to produce a stable foam with high overrun, that is the increase in volume produced by air incorporation, and a distinctive mouth-feel in the frozen ice cream.

The method of the invention has the advantage that it provides a number of ways of preparing and using the fat phase in an ice cream mix. Such is the flexibility of the method of the invention that it has also been found possible to crystallise the fat phase without an added emulsifier and instead to associate an emulsifier with the surface of the fat droplets by including the surfactant solely in the aqueous phase of the ice cream formulation. In this case, the emulsifier becomes associated with the particles' surface at the beginning of the ice cream making process during the high speed blending of the ingredients.

A positive advantage of the method according to the invention is that the disperse fat phase (i.e. the precrystallised particles of edible fat) can be prepared and conveniently stored as a stable powder until it is needed and then added either a) to the prepared aqueous phase or b) to other, dry ingredients of the ice cream mix followed by the addition of water and high speed mixing. This instant formation of an oil-in-water ice cream mix ready for immediate aeration and freezing provides a simple, rapid and continuous process for ice cream production that avoids many of the problems, delays and the inherent costs encountered in conventional, batch processes.

The method of the invention can be effectively placed upstream of the freezing stage of a continuous ice cream making plant so that holding tanks or "re-crystalllsers" in which the emulsion would normally be aged, are no longer necessary in the process. This is possible using the method of the invention because within each droplet, fat crystallisation is rapid and complete and can be used at once in ice cream making or stored for extended periods without adverse changes in appearance or functionality. The stability of fat powders produced by the method of the invention can be explained by the fact that all of the fat dissolved in the oil phase at the beginning of the process is forced to crystallise during cryogenic treatment. This is not true of other methods already in use for the production of fat powders in which there is only partial crystallisation of the fat by the end of the process and a tempering or storage stage is required to allow the process to reach equilibrium - often with the release of sufficient heat to cause partial melting and subsequent lumping or caking. Such powders are intrinsically unstable when exposed to temperature fluctuations because some solid fat is still present in solution in the oil phase and this allows tempering effects to change the properties of the fat crystals.

In view of the stability of the cryogenically precrystallised edible fat, it is possible to package it by itself or with one or more other solid constituents of an ice cream mix for use in the home preparation of ice cream. Instructions on the use of the contents of the package to make ice cream can be provided as part of a kit with the package.

Moreover, an additional benefit of the present method is that the exit temperature of the frozen fat powder can be adjusted within certain limits (depending on the cryogen used) so that after it has been mixed with the aqueous phase, the complete emulsion can enter the freezing stage in a precooled state, i.e. at a sub-ambient temperature (e.g. in the range of 10 to 15°C). This increases the efficiency of operation of ice cream making by utilising some of the energy used in the production of the cryogenic gas.

Two further advantages of the present method are that in cryogenically precrystallised particles of fat powders a) the fat crystal size is very much smaller than in fat powders prepared by spray drying or spray chilling and b) the particles have an elevated solid fat content compared with the same fat prepared by conventional methods. Whereas the small crystal size can be produced in all edible fats that are precrystallised cryogenically, the increase in solid fat content is especially notable in cases where the fat to be cryogenically treated contains or consists of a hydrogenated fat or a fraction or blend containing triglycerides with a significant percentage of saturated fatty acids, such as hydrogenated fats and tropical hard fats. The increase in solid fat content of fat powders produced by the present method increases their functionality when used in a wide range of applications, from baking to ice cream making. This cannot be achieved using existing, conventional methods of fat powder manufacture.

In the present method it has been found that the size of particles in the fat powder is influenced by a number of factors that are already known, including typically a) the design, specification and operating conditions of the aerosol nozzle or of the rotary atomiser or of the device used to produce the fine dispersion of fat to be frozen by the cryogen and b) the viscosity of the molten fat at the atomiser feed temperature, whilst edible fat particle size in the aqueous phase of the ice cream mix prior to freezing is influenced by a) the magnitude of the shear applied in dispersing the fat powder in the aqueous phase of the ice cream mix and b) the solid fat content of the fat powder at the temperature of high energy mixing with the aqueous phase, in accordance with established principles of emulsion behaviour. In general, a high speed mixer is employed to perform the blending step in the method according to the invention.

It has been found advantageous to freeze an ice cream mix (i.e. the dispersion) in which all the dispersed fat particles in the dispersion have a size or diameter of less than 30µm, preferably less than 10µm and optimally no more than 5µm in diameter, since particles larger than 25-30µm in diameter are known to produce poor mouth-feel, low overrun and loss of quality.

The edible fat to be used in the method according to the invention is, preferably, one with proven use in ice cream making and whose solid fat content at the temperature of storage is high enough to maintain its state as a non-compactable, free-flowing powder. This has practical advantages in the automated delivery of ingredients to unit operations, such as mixing. It has been found by experiment that powders made from high melting point butter fractions, a number of hard tropical fats, hydrogenated tropical fats, as well as a number of hydrogenated vegetable oils satisfy these conditions at storage temperatures below 10°C but that butter, anhydrous butter and lower melting point butter fractions must ideally be stored near to or below 0°C (depending on their triglyceride composition) to remain free flowing.

The microbiological quality of the final fat powder can be controlled by pasteurising the molten fat before cryogenic re-crystallisation. This can be done by simply adjusting the temperature of the molten fat in the holding tank.

The method according to the invention is further illustrated by the following examples.

### EXAMPLE 1

An ice cream mix was prepared by combining a powdered precrystallised non-dairy fat, produced according to the method of the invention, with a pre-prepared aqueous phase to give a final fat content of 9%.

The fat powder was prepared by melting a commercial ice cream fat that was composed of hardened palm kernel oil containing 0.5% of a purified monoglyceride derived from sunflower oil, followed by cryogenic spray crystallisation using liquid nitrogen. The mean particle size was 70µm. The solid fat content of the starting material was determined using pulsed NMR over a narrow range of temperatures (-5°C, 91.1%; 0°C, 88.6%; +5°C, 83.5%). The aqueous phase, which had the composition given in Table 1 below, was prepared using a low speed mixer.

**Table 1. Composition of the aqueous phase of an ice cream mix. (% by weight final ice cream mix)**

| | |
|---|---|
| Non-fat dry milk solids | 11.5% |
| Sugar | 14.0% |
| Hydrocolloid stabiliser | 0.3% |
| Water | 65.2% |

The edible fat powder and the aqueous phase were thoroughly mixed at a temperature within the range 10°C-15°C using a high speed blender and the resulting dispersion or ice cream mix was aerated and frozen in a Votator (Trade Mark) continuous freezer. The emergent ice cream was hardened by passage through a tunnel freezer and the resulting material stored at -20°C for 2 days before evaluation. If desired, the emergent ice cream can be packaged before having hardened.

This ice cream was compared with a control ice cream prepared from the same materials but produced by a conventional process in which the fat phase was dispersed by homogenisation and the resulting ice cream mix "aged" for several hours before freezing as described above.

Comparison was made of the two ice creams by measurement of their overrun and yield values, the latter being a measure of the hardness of the ice cream. The former was measured using standard methods and the latter by means of an Instron penetrometer fitted with a refrigerated sample holder and a 40° cone probe. Organoleptic observations were also noted to try to detect any obvious defects in ice cream structure.

These comparisons, set out in Table 2 below, showed that the properties of the two ice creams were similar.

**Table 2. Comparison of the overrun, yield value and organoleptic properties of two ice creams.**

| **Method of ice cream Preparation** | **Overrun % (SD=standard deviation)** | **Average Yield Value (n= 5) dynes/cm²x10⁴** | **Organoleptic observations** |
|---|---|---|---|
| Combining cryogenically processed fat powder and aqueous phase | | | |
| | 53 | 5.5 | Smooth |
| | SD 3.9 | | |
| Control - conventional homogenisation + "ageing" | | | |
| | 60 | 5.2 | Very smooth |
| | SD 3.4 | | |

### EXAMPLE 2

A dispersion of an ice cream mix was prepared by combining a cryogenically precrystallised anhydrous milk fat (AMF) powder, with a pre-prepared aqueous phase to give a final fat content of 12.5%.

The AMF powder was prepared by melting a commercial AMF and adding a commercial monoglyceride (glycerol monostearate) to a level of 0.3%, followed by cryogenic spray crystallisation using liquid nitrogen. The solid fat content of the AMF (before addition of the monoglyceride) was determined using pulsed NMR over a narrow range of temperatures (-5°C, 70.7%; 0°C, 67.5%; +5°C, 60.0%). The aqueous phase, which had the composition given in Table 3 below, was prepared using a low speed mixer.

**Table 3. Composition of the aqueous phase used to make a dairy ice cream. (% by weight final ice cream mix)**

| | |
|---|---|
| Non-fat dry milk solids | 13.0% |
| Sugar | 12.0% |
| Commercial hydrocolloid stabiliser | 0.2% |
| Water | 62.3% |

The AMF powder and the aqueous phase were blended in a high speed mixer and the resulting ice cream mix was aerated and frozen in a Votator continuous freezer. The emergent dairy ice cream was hardened in a tunnel freezer and the resulting material stored at -20°C for 2 days before evaluation.

This ice cream was compared with a control ice cream prepared from the same materials but produced by a conventional process in which the AMF was dispersed by homogenisation and the resulting ice cream mix "aged" for several hours before freezing as described above.

Comparison was made of the two ice creams by measurement of their overrun and yield values, as in Example 1. Organoleptic observations were also noted to try to detect any obvious defects in ice cream structure. The results of the comparison are set out in Table 4 below.

The results showed that there was little difference in the physical properties of the two ice creams but that the mouthfeel of the product made conventionally was probably smoother than would be acceptable commercially.

**Table 4. Comparison of the overrun, yield value and organoleptic properties of two dairy ice creams.**

| **Method of ice cream Preparation** | **Overrun % (SD=standard deviation)** | **Average Yield Value (n= 5) Dynes/cm²x10⁴** | **Organoleptic observations** |
|---|---|---|---|
| Combining cryogenically processed AMF powder and aqueous phase | | | |
| | 58 | 5.1 | Very smooth |
| | SD 4.8 | | |
| Control - conventional homogenisation + "ageing" | | | |
| | 67 | 4.8 | Very smooth to too smooth ("slimy") |
| | SD 4.9 | | |

### EXAMPLE 3

A dispersion of an ice cream mix was prepared by combining a powdered non-dairy fat, produced by cryogenic precrystallisation with a pre-prepared aqueous phase to give a final fat content of 10%.

The fat powder was prepared by melting a palm kernel oil containing 0.3% of a purified monoglyceride derived from sunflower oil, followed by cryogenic spray crystallisation using liquid nitrogen. The cryogenically precrystallised fat powder has a mean particle size of 70µm. The solid fat content of the starting material was determined using pulsed NMR over a narrow range of temperatures (-5°C, 85.2%; 0°C, 84.3%; +5°C, 78.9%). The aqueous phase, which had the composition given in Table 5 below, was prepared using a low speed mixer.

**Table 5. Composition of the aqueous phase of an ice cream mix containing polysorbate 60 (% by weight final ice cream mix).**

| | |
|---|---|
| Non-fat dry milk solids | 11.5% |
| Sugar | 14.0% |
| Hydrocolloid stabiliser | 0.3% |
| Polysorbate 60 | 0.1% |
| Water | 64.1% |

The fat powder and aqueous phase were thoroughly mixed using a high speed blender and the resulting ice cream mix was aerated and frozen In a Votator continuous freezer. The semi-solid ice cream that emerged was hardened by passage through a tunnel freezer and the resulting material stored at -20°C for 2 days before evaluation.

This ice cream was compared with a control ice cream prepared from the same materials but produced by a conventional process In which the fat phase was dispersed by homogenisation and the resulting ice cream mix "aged" for several hours before freezing as described above.

Comparison was made of the two ice creams using measurements as described In examples 1 and 2 and organoleptic observations were also noted to detect any obvious defects in ice cream structure. The results of the comparison are set out in Table 6 below. These showed that the two ice creams were similar In their properties.

**Table 6. Comparison of the overrun, yield value and organoleptic properties of two ice creams prepared with two added emulsifiers.**

| **Method of ice cream Preparation** | **Overrun % (SD=standard deviation)** | **Average Yield Value (n= 5) dynes/cm²x10⁴** | **Organoleptic observations** |
|---|---|---|---|
| Combining cryogenically processed fat powder and aqueous phase | | | |
| | 70 | 4.6 | Very smooth |
| | SD 3.5 | | |
| Control - conventional homogenisation + "ageing" | | | |
| | 75 | 4.2 | Very smooth |
| | SD 3.0 | | |

## Claims

1. A method of making ice cream, including the steps of blending in the presence of at least one emulsifier an aqueous ice cream precursor phase with precrystallised particles of edible fat which each contain a multiplicity of individual crystals so as to form a dispersion, and gasifying and freezing the dispersion so as to form an ice cream, in which the particles of edible fat are precrystallised cryogenically and the said dispersion is gasified and frozen without being subjected to homogenisation or ageing.

2. A method according to claim 1, in which the cryogenic precrystallisation is performed by forming the edible fat into fine particles in molten state and contacting the fine particles with a cryogen.

3. A method according to claim 2, in which a spray of liquid cryogen is directed at the fine particles of edible fat in molten state.

4. A method according to claim 2 or claim 3, in which the liquid cryogen is liquid nitrogen.

5. A method according to any one of the preceding claims, in which the precrystallised particles of edible fat take the form of a globule containing a mass of crystals of fat with entrapped pockets of oil.

6. A method according to any one of the preceding claims, In which all the dispersed fat particles in the dispersion have a size less than 30µm.

7. A method according to claim 6, in which most or all the precrystallised particles have a size less than 10µm.

8. A method according to claim 6 or claim 7, in which most or all of the precrystalllsed particles have a size of 5µm or less.

9. A method according to any one of the preceding claims, in which the edible fat is pasteurised before being precrystallised.

10. A method according to any one of the preceding claims, in which the aqueous phase is pasteurised before being blended with the precrystallised edible fat particles.

11. A method according to any one of the preceding claims, in which an emulsifier is introduced into the edible fat before it is precrystallised.

12. A method according to claim 11, in which the emulsifier is a lipophilic emulsifier.

13. A method according to claim 12, in which the lipophilic emulsifier is a saturated monoglyceride.

14. A method according to claim 13, in which the saturated monoglyceride is a glycerol monostearate.

15. A method according to any one of the preceding claims, in which the edible fat is milk fat, anhydrous milk fat, at least one milk fat fraction, a hydrogenated vegetable oil, a hard tropical fat, or a hydrogenated tropical fat.

16. A method according to any one of the preceding claims, in which the aqueous phase contains a highly surface active, water soluble emulsifier.

17. A method according to any one of the preceding claims, in which the aqueous phase contains non-fat dry milk solids and sugar.

## Patentansprüche

1. Verfahren zum Herstellen von Eiscreme, umfassend die Schritte des Mischens einer wässrigen Eiscreme-Vorläuferphase mit vorkristallisierten Speisefett-Partikeln, die jeweils eine Vielzahl einzelner Kristallen enthalten, in Gegenwart wenigstens eines Emulgators, um so eine Dispersion zu bilden, und Begasen und Gefrieren der Dispersion, um so eine Eiscreme zu bilden, wobei die Speisefett-Partikel kryogen vorkristallisiert sind und die Dispersion begast und gefroren wird, ohne einer Homogenisierung oder Alterung unterzogen zu werden.

2. Verfahren gemäß Anspruch 1, wobei die kyrogene Vorkristallisation durch Formen des Speisefetts zu feinen Partikeln in geschmolzenem Zustand und in Kontakt bringen der feinen Partikel mit einem Kryogen durchgeführt wird.

3. Verfahren gemäß Anspruch 2, wobei ein Spray von flüssigem Kryogen auf die feinen Speisefett-Partikel in geschmolzenem Zustand gerichtet wird.

4. Verfahren gemäß Anspruch 2 oder Anspruch 3, wobei das flüssige Kryogen flüssiger Stickstoff ist.

5. Verfahren gemäß einem der vorstehenden Ansprüche, wobei die vorkristallisierten Speisefett-Partikel die Form eines Kügelchens annehmen, das eine Masse von Fettkristallen mit eingeschlossenen Taschen von Öl enthält.

6. Verfahren gemäß einem der vorstehenden Ansprüche, wobei alle der dispergierten Fettpartikel in der Dispersion eine Größe von weniger als 30 µm aufweisen.

7. Verfahren gemäß Anspruch 6, wobei die meisten oder alle der vorkristallisierten Partikel eine Größe von weniger als 10 µm aufweisen.

8. Verfahren gemäß Anspruch 6 oder Anspruch 7, wobei die meisten oder alle der vorkristallisierten Partikel eine Größe von 5 µm oder weniger aufweisen.

9. Verfahren gemäß einem der vorstehenden Ansprüche, wobei das Speisefett pasteurisiert wird, bevor es vorkristallisiert wird.

10. Verfahren gemäß einem der vorstehenden Ansprüche, wobei die wässrige Phase pasteurisiert wird, bevor sie mit den vorkristallisierten Speisefett-Partikeln gemischt wird.

11. Verfahren gemäß einem der vorstehenden Ansprüche, wobei in das Speisefett ein Emulgator eingeführt wird, bevor es vorkristallisiert wird.

12. Verfahren gemäß Anspruch 11, wobei der Emulgator ein lipophiler Emulgator ist.

13. Verfahren gemäß Anspruch 12, wobei der lipophile Emulgator ein gesättigtes Monoglycerid ist.

14. Verfahren gemäß Anspruch 13, wobei das gesättigte Monoglycerid ein Glycerolmonostearat ist.

15. Verfahren gemäß einem der vorstehenden Ansprüche, wobei das Speisefett Milchfett, wasserfreies Milchfett, wenigstens eine Milchfettfraktion, ein hydriertes Pflanzenöl, ein hartes tropisches Fett oder ein hydriertes tropisches Fett ist.

16. Verfahren gemäß einem der vorstehenden Ansprüche, wobei die wässrige Phase einen hochgradig oberflächenaktiven wasserlöslichen Emulgator enthält.

17. Verfahren gemäß einem der vorstehenden Ansprüche, wobei die wässrige Phase fettfreie Trockenmilch-Feststoffe und Zucker enthält.

## Revendications

1. Méthode de production de crème glacée, comportant les étapes de malaxage, en présence d'au moins un émulsifiant, d'une phase aqueuse de précurseur de crème glacée avec des particules pré-cristallisées de matière grasse comestible qui contiennent chacune une multiplicité de cristaux individuels, de façon à former une dispersion, et de gazéification et de congélation de la dispersion de façon à former une crème glacée, dans laquelle les particules de matière grasse comestible sont pré-cristallisées par voie cryogénique et ladite dispersion est gazéifiée et congelée sans être soumise à une homogénéisation ou une maturation.

2. Méthode selon la revendication 1, dans laquelle la pré-cristallisation cryogénique est obtenue par la transformation de la matière grasse comestible en fines particules à l'état fondu et la mise en contact des fines particules avec un cryogène.

3. Méthode selon la revendication 2, dans laquelle un spray de cryogène liquide est dirigé vers les fines particules de matière grasse comestible à l'état fondu.

4. Méthode selon la revendication 2 ou la revendication 3, dans laquelle le cryogène liquide est l'azote liquide.

5. Méthode selon l'une quelconque des revendications précédentes, dans laquelle les particules pré-cristallisées de matière grasse comestible se présentent sous la forme d'un globule contenant une masse de cristaux de matière grasse ayant des poches occluses d'huile.

6. Méthode selon l'une quelconque des revendications précédentes, dans laquelle toutes les particules de matière grasse dispersées dans la dispersion ont une taille inférieure à 30 µm.

7. Méthode selon la revendication 6, dans laquelle la plupart ou l'ensemble des particules pré-cristallisées ont une taille inférieure à 10 µm.

8. Méthode selon la revendication 6 ou la revendication 7, dans laquelle la plupart ou l'ensemble des particules pré-cristallisées ont une taille de 5 µm ou moins.

9. Méthode selon l'une quelconque des revendications précédentes, dans laquelle la matière grasse comestible est pasteurisée avant d'être pré-cristallisée.

10. Méthode selon l'une quelconque des revendications précédentes, dans laquelle la phase aqueuse est pasteurisée avant d'être mélangée avec les particules de matière grasse comestible pré-cristallisée.

11. Méthode selon l'une quelconque des revendications précédentes, dans laquelle un émulsifiant est introduit dans la matière grasse comestible avant sa pré-cristallisation.

12. Méthode selon la revendication 11, dans laquelle l'émulsifiant est un émulsifiant lipophile.

13. Méthode selon la revendication 12, dans laquelle l'émulsifiant lipophile est un monoglycéride saturé.

14. Méthode selon la revendication 13, dans laquelle le monoglycéride saturé est un monostéarate de glycérol.

15. Méthode selon l'une quelconque des revendications précédentes, dans laquelle la matière grasse comestible est de la matière grasse de lait, de la matière grasse de lait anhydre, au moins une fraction de matière grasse de lait, une huile végétale hydrogénée, une matière grasse dure d'origine tropicale, ou une matière grasse hydrogénée d'origine tropicale.

16. Méthode selon l'une quelconque des revendications précédentes, dans laquelle la phase aqueuse contient un émulsifiant hautement tensioactif et hydrosoluble.

17. Méthode selon l'une quelconque des revendications précédentes, dans laquelle la phase aqueuse contient matière sèches dégraissées de lait et du sucre.
